(19)

Europäisches Patentamt

European Patent Office

Office européen des brevets

(11) **EP 4 603 846 A2**

(12) **EUROPEAN PATENT APPLICATION**

(43) Date of publication:
**20.08.2025   Bulletin 2025/34**

(21) Application number: **25187612.4**

(22) Date of filing: **10.10.2022**

(51) International Patent Classification (IPC):
*G01P 15/08* *(2006.01)*

(52) Cooperative Patent Classification (CPC):
**G01P 21/00; G01P 15/125; G01P 15/18;**
G01P 2015/0865; G01P 2015/0868

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.10.2021   US 202117509247**

(62) Document number(s) of the earlier application(s) in
accordance with Art. 76 EPC:
**22200494.7 / 4 170 356**

(71) Applicants:
• **STMicroelectronics S.r.l.**
**20864 Agrate Brianza (MB) (IT)**
• **STMicroelectronics Inc.**
**Coppell, TX 75019 (US)**

(72) Inventors:
• **GARBARINO, Marco**
**20047 CUSAGO (MI) (IT)**
• **CHOI, Davy**
**CARROLLTON, 75007 (US)**
• **RIZZINI, Francesco**
**25050 PASSIRANO (BS) (IT)**
• **HU, Yamu**
**ALLEN, 75013 (US)**

(74) Representative: **Studio Torta S.p.A.**
**Via Viotti, 9**
**10121 Torino (IT)**

Remarks:
This application was filed on 04-07-2025 as a
divisional application to the application mentioned
under INID code 62.

(54) **MEMS ACCELEROMETER SELF-TEST USING A VARIABLE EXCITATION VOLTAGE AND FIXED TIMING**

(57)      A microelectromechanical system (MEMS) accelerometer sensor (12x, 12y, 12z) has a mobile mass and a sensing capacitor. To self-test the sensor, a test signal having a variably controlled excitation voltage that has a variable duty cycle is applied to the sensing capacitor. The leading edge of the test signal is aligned to coincide with reset phases of a sensing circuit (32-36) coupled to the sensing capacitor. The variably controlled excitation voltage of the test signal is configured to cause an electrostatic force which produces a desired physical displacement of the mobile mass. During a read phase of the sensing circuit, a variation in capacitance of sensing capacitor due to the actual physical displacement of the mobile mass is sensed for comparison to the desired physical displacement.

FIG. 4A

EP 4 603 846 A2

**Description**

The present invention generally relates to a microelectromechanical system (MEMS) sensor of an accelerometer type and, in particular, to a technique for performing a self-test on the MEMS accelerometer.

A capacitive microelectromechanical system (MEMS) accelerometer sensor typically includes two stator nodes and one rotor node. An application specific integrated circuit (ASIC) is electrically connected to the three nodes of the MEMS sensor. The acceleration of the MEMS sensor in response to application of an external force causes a displacement of a mobile (proof) mass (which is electrically coupled to the one rotor node) relative to a pair of stationary electrodes (which are electrically coupled, respectively, to the two stator nodes) resulting in a change in capacitance. The ASIC applies a square wave drive voltage to the rotor node and monitors the change in capacitance at the two stator nodes to determine an acceleration due to the applied external force.

It is known to utilize a MEMS accelerometer sensor in a safety critical application such as with the passenger safety system of an automobile. For example, the MEMS accelerometer sensor may operate to assist with electronic stability control functions, mechanical fault detection and crash detection (for trigging airbag deployment and/or seat belt tensioning). It is accordingly imperative that the MEMS accelerometer sensor function properly. Self-testing of the MEMS accelerometer sensor is needed to ensure proper sensor operation.

US 2016/202286A1 teaches a capacitive sensor including a plurality of sensing elements receiving each a respective AC test signal.

There is a need in the art for a self-test technique for use in connection with a MEMS accelerometer sensor allowing optimal self-testing in spite of fabrication spread and/or different time drift of the acceleration sensors.

Therefore, an aim of the invention is to provide a self-test technique for use in connection with a MEMS accelerometer sensor.

According to the present invention, a method for self-testing an accelerometer system is provided, as defined in the attached claims.

For a better understanding of the embodiments, reference will now be made by way of example only to the accompanying figures in which:

Figure 1 is a block diagram of a single axis microelectromechanical system (MEMS) accelerometer sensing system;
Figure 2 is a block diagram of a tri-axis MEMS accelerometer sensing system;
Figures 3A and 3B are timing diagrams illustrating operation of the systems of Figures 1 and 2, respectively;
Figure 4A shows self-test timing diagrams for a single axis sensor using a variable duty cycle self-test signal;
Figure 4B show self-test timing diagrams for a single axis sensor using a variable voltage level self-test signal, that is not part of the present invention;
Figure 5A illustrates a self-test timing diagrams for a tri-axis sensor using the variable duty cycle self-test signal of Figure 4A;
Figure 5B illustrates a self-test timing diagrams for a tri-axis sensor using the variable voltage level self-test signal of Figure 5B that is not part of the present invention;
Figure 6 is a circuit diagram for a multiplexer supporting normal sensing mode and self-testing mode;
Figure 7 which shows details of the self-test voltage generator circuit; and
Figure 8 illustrates an alternative embodiment for the MEMS accelerometer sensor.

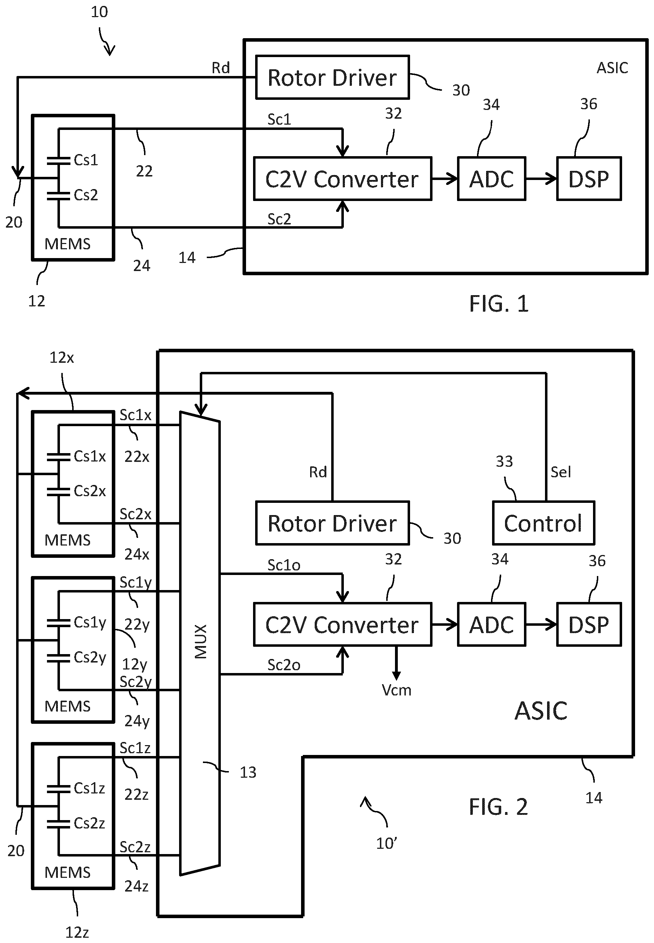

Reference is now made to Figure 1 which shows a block diagram of a single axis microelectromechanical system (MEMS) accelerometer sensing system 10. The system 10 includes a MEMS accelerometer sensor 12 and an application specific integrated circuit (ASIC) 14 that is electrically connected to the sensor 12. It will be noted that the MEMS accelerometer sensor 12 is typically formed on a single integrated circuit die, and the ASIC 14 is typically formed on a separate integrated circuit die (but may in some implementations be integrated with the sensor 12 on a common die).

The MEMS accelerometer sensor 12 includes a rotor node 20 that is driven with a rotor drive signal Rd generated by a driver circuit 30 of the ASIC 14 and two stator nodes 22 and 24 at which capacitive sense signals Sc1, Sc2 are output for processing by the ASIC.

The rotor drive signal Rd is typically a square wave signal and has a certain drive frequency and drive voltage Vrot.

The ASIC 14 includes a capacitance-to-voltage (C2V) converter circuit 32 coupled to receive the capacitive sense signals Sc1, Sc2 from the stator nodes 22 and 24 and which operates to convert a sensed change (i.e., difference) in capacitance of the MEMS accelerometer sensor 12 to an analog voltage. An analog-to-digital converter (ADC) circuit 34 functions to convert the analog voltage to a digital signal that is indicative of sensed acceleration in the direction of the single axis for processing by a digital signal processor (DSP) 36 within the ASIC 14. In an embodiment, the ADC circuit 34 may comprise a sigma-delta ADC or a successive approximation (SAR) ADC or other suitable ADC known to those skilled in the art.

Reference is now made to Figure 2 which shows a block diagram of a tri-axis microelectromechanical system (MEMS) accelerometer sensing system 10'. The system 10' includes three MEMS accelerometer sensors 12x, 12y, 12z (with one sensor for each of the orthogonal sensing directions X, Y, Z), and an application specific integrated circuit (ASIC) 14 that includes a multiplexer (MUX) 13 for selectively electrically connecting to each sensor 12x, 12y, 12z in response to a selection signal Sel generated by a control circuit 33 of the ASIC 14.

It will be noted that the three MEMS accelerometer sensors 12x, 12y, 12z are typically formed on a single integrated circuit die, but in some embodiments may be provided as separate circuits, and the ASIC 14 is typically on a separate integrated circuit die (but may in some implementations be integrated with the sensors 12x, 12y, 12z on a common die).

Each MEMS accelerometer sensor 12x, 12y, 12z includes a rotor node 20 that is driven with a rotor drive signal Rd generated by a driver circuit 30 of the ASIC 14 and two stator nodes 22 and 24 (respectively, nodes 22x, 24x, 22y, 24y, 22z, 24z) at which capacitive sense signals Sc1, Sc2 (respectively, signals Sc1x, Sc2x, Sc1y, Sc2y, Sc1z, Sc2z) are output for selection by the MUX 13 and processing by the circuits within the ASIC.

The rotor drive signal Rd is typically a square wave signal and has a certain drive frequency and drive voltage Vrot.

The ASIC 14 includes a capacitance-to-voltage (C2V) converter circuit 32 coupled by the MUX 13 to receive selected capacitive sense signals Sc1o, Sc2o from the stator nodes 22 and 24 of one selected sensor 12x, 12y, 12z at a time and which operates to convert a sensed change (i.e., difference) in capacitance of the selected MEMS accelerometer sensor 12x, 12y, 12z to an analog voltage. An analog-to-digital converter (ADC) circuit 34 functions to convert the analog voltage to a digital signal that is indicative of sensed acceleration for processing by a digital signal processor (DSP) 36 within the ASIC 14. In an embodiment, the ADC circuit 34 may comprise a sigma-delta ADC or a successive approximation (SAR) ADC or other suitable ADC known to those skilled in the art.

The general structural configuration of the MEMS accelerometer sensor 12, 12x, 12y, or 12z is well known to those skilled in the art. Generally speaking, the MEMS accelerometer sensor 12, 12x, 12y, or12z includes a stator and a mobile (proof) mass. The stator and mobile mass may be made of semiconductor material connected by means of elastic (spring) suspension elements. The stator and mobile mass typically include a plurality of fixed arms and mobile arms, respectively, which are interdigitated in a comb-fingered configuration so as to form a pair of capacitors which have a common electrical terminal coupled to the rotor node 20 and separate electrical terminals coupled, respectively, to the two stator nodes 22 and 24. The capacitance of each capacitor of the pair of capacitors depends on the relative positions of the arms which is, of course, dependent on the position of the mobile mass relative to the stator. In response to the applied force, there is movement of the mobile mass relative to the stator resulting in a corresponding change in capacitance. This change in capacitance is sensed by the ASIC through the capacitive sense signals Sc1, Sc2 and converted to a digital value indicative of acceleration.

The MEMS accelerometer sensor 12, 12x, 12y, or 12z can be electrically represented as shown in Figures 1 and 2 by a first sensing capacitor Cs1 having a first terminal electrically connected to the rotor node 20 and a second terminal electrically connected to the stator node 22 and configured to produce capacitive sense signal Sc1 in response to the rotor drive signal Rd and a second sensing capacitor Cs2 having a first terminal electrically connected to the rotor node 20 and a second terminal electrically connected to the stator node 24 and configured to produce capacitive sense signal Sc1 in response to the rotor drive signal Rd.

The C2V converter circuit 32 and ADC circuit 34 of the ASIC 14 are controlled to cyclically operate in accordance with a sensing period that includes a reset phase and a read phase during which the rotor node 20 of the MEMS accelerometer sensor 12 is driven with the square wave rotor drive signal Rd.

In the reset phase of the sensing period, the sensing circuitry of the C2V converter circuit 32 is reset. For example, in the context of a C2V converter circuit 32 which implements a switched capacitor integration circuit, the integration capacitors are reset. The two single-ended inputs of the differential C2V converter circuit 32 may be shorted together by a switching circuit during the reset phase, and the two single-ended outputs of the differential C2V converter circuit 32 may be shorted together by a switching circuit during the reset phase.

In the read phase of the sensing period, the sensing circuitry of the C2V converter circuit 32 is coupled to the stator nodes 22 and 24 (through the MUX 13, in the Figure 2 implementation) and senses from the sense signals Sc1 and Sc2 the change in capacitance at the first and second sensing capacitors Cs1 and Cs2 which is indicative of an acceleration of the mobile mass within the MEMS accelerometer sensor 12. The analog voltage output by the C2V converter circuit 32 is converted to a digital signal by the ADC circuit 34, wherein the digital signal is indicative of the sensed acceleration.

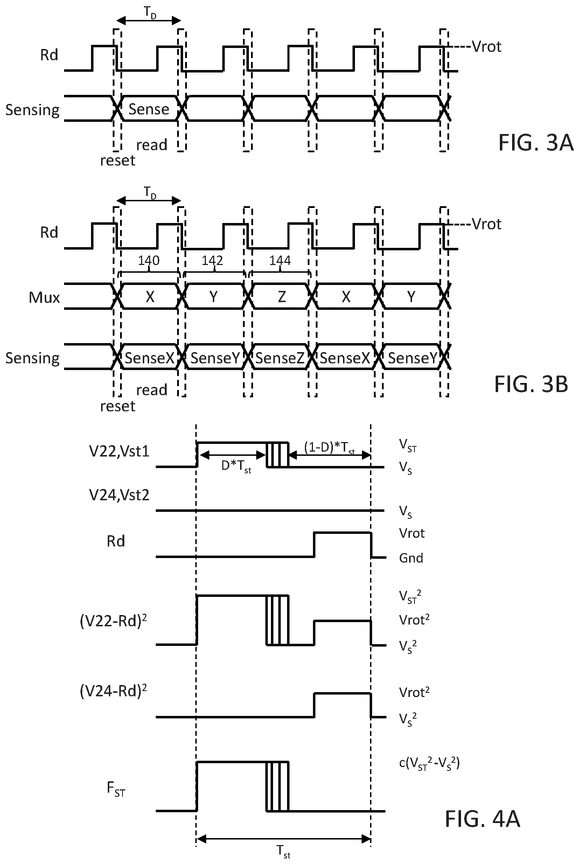

Figure 3A illustrates a timing diagram for operation of the sensing system 10, and Figure 3B illustrates a timing diagram for operation of the sensing system 10'. The square wave rotor drive signal Rd toggles between a reference voltage (for example, ground) and the drive voltage Vrot. The drive signal Rd has a drive period $T_D$. The reset phase is here performed coincident with the trailing edge of the square wave rotor drive signal Rd at the end of each drive period $T_D$. Each read phase during which sensing of the capacitive sense signals Sc1, Sc2 from the sensor 12 is made occurs within the drive period $T_D$ between consecutive reset phases.

In the tri-axis implementation, the control signal Sel controls the MUX 13 to cyclically change the selection of one of the sensors 12x, 12y, 12z, coincident with the reset phase, and the sensing of the capacitive sense signals Sc1, Sc2 from the selected sensor 12 occurs between consecutive reset phases.

As previously noted, it is important to ensure that the MEMS accelerometer sensor 12 is functioning properly, and to that end the ASIC implements a self-test mode of operation. A diffused approach for generating a self-test signal for a MEMS accelerometer sensor 12 is to introduce a difference in the voltage between the stator nodes 22 and 24. This voltage difference induces an unbalancing force between the stators which leads to a displacement of the mobile (proof) mass. This displacement can then be read using the ASIC. The force applied to displace the mobile mass is a function of the square of the difference between the voltage applied to the stator node Vst and the voltage applied to the rotor Vrot. If the same stator voltage is applied to both stator nodes 22 and 24, the applied forces cancel out. However, if different stator voltages are applied to the stator nodes 22 and 24, there is a net force which displaces the mobile mass.

Assuming a simplified timing scheme referred to a single axis sensor like that shown in Figure 1, it is possible to obtain an analytical expression for the applied self-test force. The self-test voltage applied to one of the two stator nodes 22 and 24 is a DC signal. It is also noted that the mechanical element will filter any high frequency force contribution. Thus, the relevant information is the average value of the self-test force given by:

$$\overline{F_{ST}} = \frac{1}{T_{st}} \int\limits_0^{T_{st}} F_{ST}\, dt$$

Where $T_{st}$ is the period of time over which self-test is performed. This integral can be easily solved graphically as:

$$\overline{F_{ST}} = c * \frac{1}{T_{st}} * (V_{ST}^2 - V_S^2) * D * T_{st} = c * D * (V_{ST}^2 - V_S^2)$$

In the foregoing equation, c is a proportionality constant, $V_{ST}$ is the self-test voltage applied to one of the two stator nodes 22 and 24 with a duty cycle D for a self-test period $T_{st}$, and $V_S$ is the reference voltage (for example, a common mode voltage $V_{CM}$) applied to the other of the two stator nodes 22 and 24. The foregoing equation shows that variation of the duty cycle D or variation of the self-test excitation amplitude $V_{ST}$ (which is not part of the invention) can be used to alter the magnitude of the self-test force applied to the sense mass.

Figure 4A shows a self-test timing diagram where the self-test excitation amplitude $V_{ST}$ for the self-test signal is fixed and the duty cycle D can be varied to control the applied self-test force. The use of parallel vertical lines for the trailing edge of the self-test signal Vst1 is intended to indicate that the position of the trailing edge within the self-test period $T_{st}$ is variably controlled through the use of a variable duty cycle.

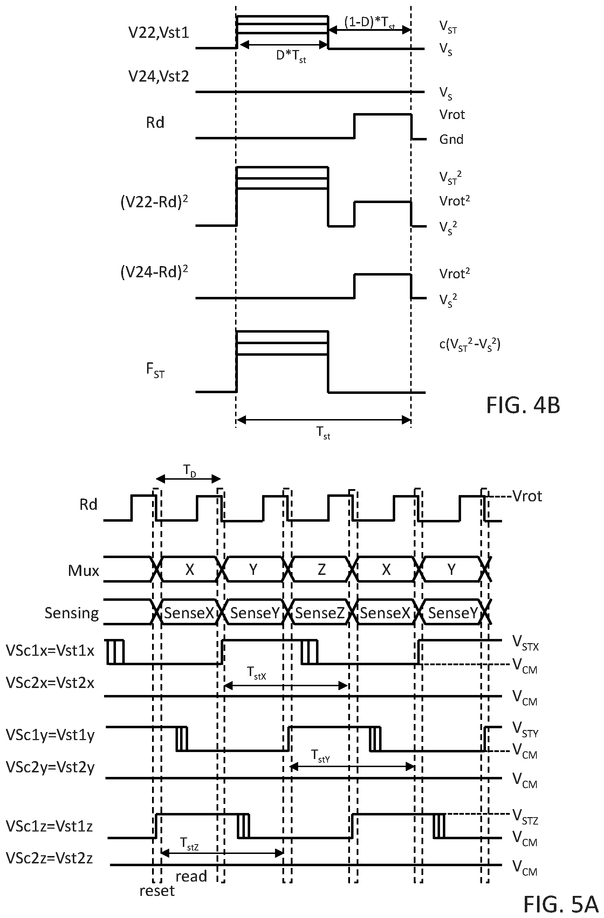

Figure 4B shows a self-test timing diagram where the self-test excitation amplitude $V_{ST}$ for the self-test signal can be varied and the duty cycle D is fixed to control the applied self-test force, according to a solution that is not part of the present invention. The use of parallel horizontal lines for the pulse of the self-test signal Vst1 is intended to indicate that the amplitude within the self-test period $T_{st}$ is variably controlled through the use of a variable excitation voltage level. In each example, the first self-test signal Vst1 (with either the variable duty cycle or variable voltage level) is applied to the first stator node 22 and the second self-test signal Vst2 (at the fixed voltage Vs) is applied to the second stator node 24. It will be understood that the self-test signals could instead be applied to the opposite stator nodes.

With reference once again to Figure 3B and tri-axis sensing system, it will be noted that when the MUX 13 selectively connects one of the MEMS accelerometer sensors 12x, 12y, or 12z to the C2V converter 32 in order to perform a read, the other two sensors are disconnected from sensing. This disconnection of the other two sensors provides an opportunity to incorporate the self-test process using the same timing as used for normal sensor operation. While the stator nodes 22 and 24 for one of the MEMS accelerometer sensors 12 (say, for example, sensor 12x) are coupled by the MUX 13 to the C2V converter 32 for sensing displacement of the mobile mass through the sensed capacitance on capacitors Cs1x, Cs2x, the ASIC 14 can apply self-test signals (in accordance with the variable duty cycle technique of Figure 4A as shown in Figure 5A) to the stator nodes 22 and 24 for the other two MEMS accelerometer sensors 12 (say, for example, sensors 12y, 12z and the capacitors Cs1y, Cs2y, Cs1z, Cs2z) in order to apply the self-test force $F_{ST}$ and displace the corresponding mobile masses. In each case, the leading edge of the pulse for the self-test signal is aligned with the reset phase.

For the variable duty cycle self-test technique of Figures 4A and 5A, the trailing edge of the pulse for the self-test signal will typically occur during the sensing phase (i.e., between reset phases) for a different sensing axis.

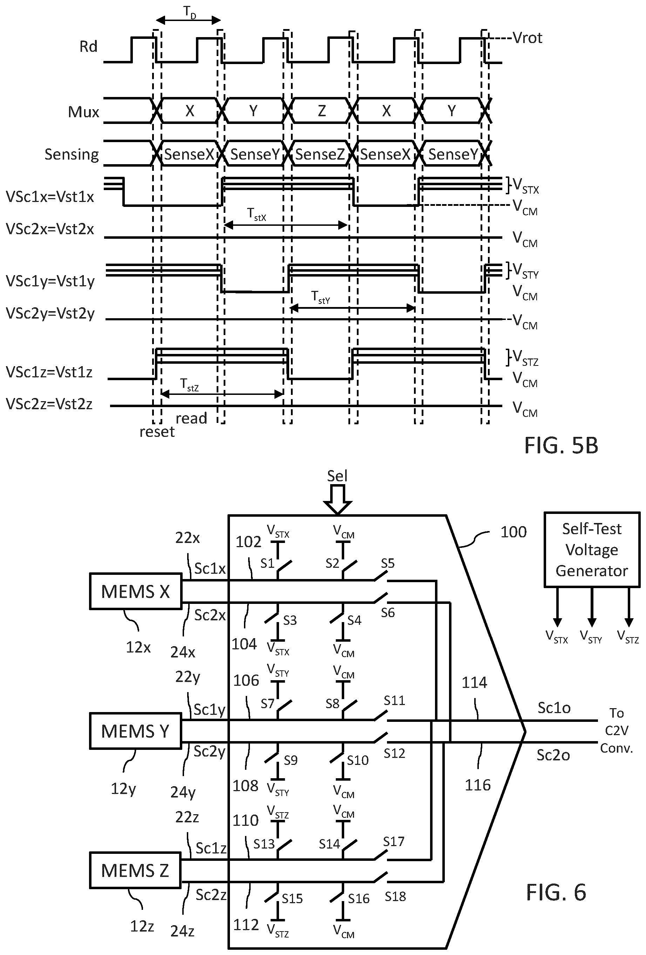

Reference is now made to Figure 6 which shows a circuit diagram for a multiplexer (MUX) 100 that may be used as the multiplexer 13 in the tri-axis sensor of Figure 2 to support self-test operation. The MUX 100 has a first pair of inputs coupled to the stator nodes 22x and 24x of the x-axis MEMS sensor 12x using input signal lines 102 and 104, a second pair of inputs coupled to the stator nodes 22y and 24y of the y-axis MEMS sensor 12y using input signal lines 106 and 108, and a third pair of inputs coupled to the stator nodes 22z and 24z of the z-axis MEMS sensor 12z using input signal lines 110 and 112. The MUX 100 further includes a pair of outputs coupled to the C2V converter of the ASIC using output signal lines 114 and 116.

A first switch S1 selectively connects signal line 102 to a first self-test voltage $V_{STX}$ generated by a self-test voltage generator circuit and a second switch S2 selectively connects signal line 102 to a common mode voltage $V_{CM}$ of the C2V converter 32. A third switch S3 selectively connects signal line 104 to the first self-test voltage $V_{STX}$ and a fourth switch S4 selectively connects signal line 104 to the common mode voltage $V_{CM}$.

The first self-test voltage $V_{STX}$ and common mode voltage $V_{CM}$ are selectively applied through the MUX 100 in order to apply the self-test signal to the stator nodes of the sensor 12x during self-test operation.

A fifth switch S5 selectively connects input signal line 102 to output signal line 114, and a sixth switch S6 selectively connects input signal line 104 to output signal line 116.

A seventh switch S7 selectively connects signal line 106 to a second self-test voltage $V_{STY}$ generated by the self-test voltage generator circuit and an eighth switch S8 selectively connects signal line 106 to the common mode voltage $V_{CM}$. A ninth switch S9 selectively connects signal line 108 to the second self-test voltage $V_{STY}$ and a tenth switch S10 selectively connects signal line 108 to the common mode voltage $V_{CM}$.

The second self-test voltage $V_{STY}$ and common mode voltage $V_{CM}$ are selectively applied through the MUX 100 in order to apply the self-test signal to the stator nodes of the sensor 12y during self-test operation.

An eleventh switch S11 selectively connects input signal line 106 to output signal line 114, and a twelfth switch S12 selectively connects input signal line 108 to output signal line 116.

A thirteenth switch S13 selectively connects signal line 110 to a third self-test voltage $V_{STZ}$ generated by the self-test voltage generator circuit and a fourteenth switch S14 selectively connects signal line 110 to the common mode voltage $V_{CM}$. A fifteenth switch S15 selectively connects signal line 112 to the third self-test voltage $V_{STZ}$ and a sixteenth switch S16 selectively connects signal line 112 to the common mode voltage $V_{CM}$.

The third self-test voltage $V_{STZ}$ and common mode voltage $V_{CM}$ are selectively applied through the MUX 100 in order to apply the self-test signal to the stator nodes of the sensor 12z during self-test operation.

A seventeenth switch S17 selectively connects input signal line 110 to output signal line 114, and an eighteenth switch S18 selectively connects input signal line 112 to output signal line 116.

Actuation of the switches S1-S18 is controlled using the select signal Sel (configured as a multi-bit digital signal) generated by the control circuit of the ASIC. The MUX 100 supports both the normal sensing operation (where the sense voltages VSc at the stator nodes are sensed) and the self-test operation (where the self-test voltages $V_{STX}$, $V_{STY}$ and $V_{STZ}$ are selectively applied to the rotor nodes and the voltages Vst are sensed).

Normal operation of the sensor will now be described (see, also, Figure 3B).

When sensing the x-axis MEMS sensor 12x (reference 140, Figure 3B), the control circuit of the ASIC 14 generates the selection signal Sel to actuate (i.e., close) switches S5, S6 (which connect the stator nodes 22x, 24x of sensor 12x to the C2V converter circuit). Switches S2 and S4 are deactuated (and switches S1 and S3 are never actuated in normal operation). The selection signal Sel further deactuates (i.e., opens) switches S11, S12, S17 and S18 (which disconnect the y-axis MEMS sensor 12y and the z-axis MEMS sensor 12z), and switches S8, S10, S14 and S16 are actuated (i.e., closed) to bias the stator nodes of the sensors 12y and 12z to the common mode voltage $V_{CM}$.

When sensing the y-axis MEMS sensor 12y (reference 142, Figure 3B), the control circuit of the ASIC 14 generates the selection signal Sel to actuate (i.e., close) switches S11, S12 (which connect the stator nodes 22y, 24y of sensor 12y to the C2V converter circuit). Switches S8 and S10 are deactuated (and switches S7 and S9 are never actuated in normal operation). The selection signal Sel further deactuates (i.e., opens) switches S5, S6, S17 and S18 (which disconnect the x-axis MEMS sensor 12x and the z-axis MEMS sensor 12z), and switches S2, S4, S14 and S16 are actuated (i.e., closed) to bias the stator nodes of the sensors 12x and 12z to the common mode voltage $V_{CM}$.

When sensing the z-axis MEMS sensor 12z (reference 144, Figure 3B), the control circuit of the ASIC 14 generates the selection signal Sel to actuate (i.e., close) switches S17, S18 (which connect the stator nodes 22z, 24z of sensor 12z to the C2V converter circuit). Switches S14 and S16 are deactuated (and switches S13 and S15 are never actuated in normal operation). The selection signal Sel further deactuates (i.e., opens) switches S5, S6, S11 and S12 (which disconnect the x-axis MEMS sensor 12x and the y-axis MEMS sensor 12y), and switches S2, S4, S8 and S10 are actuated (i.e., closed) to bias the stator nodes of the sensors 12x and 12y to the common mode voltage $V_{CM}$.

Self-test operation of the sensor using the variable duty cycle, fixed amplitude technique will now be described (see, also, Figure 5A).

Let's assume that a test of the x-axis MEMS sensor 12x is being performed corresponding to an x-axis self-test period $T_{stX}$. There are two drive periods $T_D$ of the drive signal Rd within the x-axis self-test period $T_{stX}$, these two drive periods corresponding to when sensing is performed for the y-axis MEMS sensor 12y and z-axis MEMS second 12z. Coincident with an end of the drive period $T_D$ immediately preceding the x-axis self-test period $T_{stX}$ (i.e., the drive period where sensing of the sensor 12x is being performed), this end corresponding to a trailing edge of the rotor drive signal Rd, and corresponding to a first drive period of the two drive periods within the x-axis self-test period $T_{stX}$, the control circuit of the ASIC 14 generates the selection signal Sel to deactivate (i.e., open) switches S5 and S6 and disconnect the x-axis MEMS sensor 12x from the C2V converter of the ASIC, and actuate (i.e., close) switches S1 and S4 to apply the first self-test voltage $V_{SFX}$ through signal line 102 to the stator node 22x and apply the common mode voltage $V_{CM}$ through signal line 104 to the stator node 24x of the x-axis MEMS sensor 12x.

Note here that switches S2 and S3 remain open from the immediately preceding drive period where sensing of the sensor 12x is being performed. Note also, as an alternative, the switches S2 and S3 are closed and the switches S1 and S4 remain open, to oppositely apply the first self-test voltage $V_{STX}$ through signal line 104 to the stator node 24x and apply the common mode voltage $V_{CM}$ through signal line 102 to the stator node 22x of the x-axis MEMS sensor 12x. The leading edge transition from the common mode voltage $V_{CM}$ to the first self-test voltage $V_{STX}$ for the x-axis MEMS sensor 12x self-test occurs during the reset phase.

The voltage level of the first self-test voltage $V_{STX}$ is fixed, but the duration of time this voltage is applied to the stator node is variably controlled by the control circuit of the ASIC 14 through the selection signal Sel in order to set the amount of self-test force $F_{ST}$ that is being applied to displace the mobile (proof) mass of the x-axis MEMS sensor 12x.

In a second drive period of the two drive periods within the x-axis self-test period $T_{stX}$, the deactuation of switches S2, S3, S5 and S6 continues, but the control circuit of the ASIC 14 generates the selection signal Sel to deactivate (i.e., open) switch S1 and actuate (i.e., close) switch S2 to terminate application of the first self-test voltage $V_{STX}$ and apply the common mode voltage $V_{CM}$ through line 102 to the stator node 22x in accordance with the variable duty cycle.

Note: alternatively, instead open switch S3 and close switch S4 in connection with the opposite application.

The trailing edge transition from the first self-test voltage $V_{STX}$ to the common mode voltage $V_{CM}$ for the x-axis MEMS sensor 12x self-test is controlled by the desired duty cycle and will most likely occur sometime in or around the middle of the second drive period of the two drive periods for the x-axis self-test period $T_{stX}$. After the end of the x-axis self-test period $T_{stX}$, the control circuit of the ASIC 14 generates the selection signal Sel to close switches S5, S6 for the drive period where sensing of the sensor 12x is being performed. In this phase, the stator voltages at nodes 22x, 24x are biased to the common mode voltage $V_{CM}$ level by the C2V converter 32. A sensing of the displaced mobile (proof) mass of the x-axis MEMS sensor 12x, due to the previously applied self-test force $F_{ST}$, can then be made by sensing the capacitance of the capacitors Cs1x and Cs2x.

A magnitude of the sensed displacement is compared to an expected displacement in view of the applied self-test force $F_{ST}$ in order to confirm proper operation of the x-axis MEMS sensor 12x. The actuation of the switches as described above causes the stator voltages VSc1x and VSc2x to assume the time behavior depicted in Figure 5A.

It will be noted, due to the interleaved sensing operation of the system, that during the first drive period of the two drive periods for the x-axis self-test period $T_{stX}$, the control circuit of the ASIC 14 generates the selection signal Sel to actuate (i.e., close) switches S11 and S12 to connect the stator nodes 22y, 24y for the y-axis MEMS sensor 12y to the C2V converter of the ASIC for capacitance Cs1y, Cs2y sensing. Furthermore, during the second drive period of the two drive periods for the x-axis self-test period $T_{stX}$, the control circuit of the ASIC generates the selection signal Sel to actuate (i.e., close) switches S17 and S18 to connect the stator nodes 22z, 24z for the z-axis MEMS sensor 12z to the C2V converter of the ASIC for capacitance Cs1z, Cs2z sensing. The application of the first self-test voltage $V_{STX}$ to one of the stator nodes 22x (VSc1x), 24x (VSc2x) of the x-axis MEMS sensor 12x is accordingly being made concurrently with sensing operations being performed on other sensing axes.

A similar operation is performed with respect to testing of the y-axis MEMS sensor 12y (through stator nodes 22y, 24y) and the z-axis MEMS sensor 12z (through stator nodes 22z, 24z). The corresponding self-test periods $T_{stY}$ and $T_{stZ}$ are simply shifted (offset and partially overlapping) in time. Specifically, application of the second self-test voltage $V_{STY}$ for a variable duty cycle, fixed amplitude self-test causing displacement of the sensing (proof mass) of the y-axis MEMS sensor 12y occurs during the drive periods $T_D$ associated with z-axis sensing and x-axis sensing. Similarly, application of the third self-test voltage $V_{STZ}$ for a variable duty cycle, fixed amplitude self-test causing displacement of the sensing (proof mass) of the z-axis MEMS sensor 12z occurs during the drive periods $T_D$ associated with x-axis sensing and y-axis sensing.

In view of the variable duty cycle for the application of the self-test voltages $V_{STX}$, $V_{STY}$, $V_{STZ}$ during self-test signal, there is a likelihood that the trailing edge transition to the common mode voltage $V_{CM}$ level will occur while one of these other sensing axes are connected by the MUX 100 to the C2V converter circuit of the ASIC (i.e., not during a reset phase). This can lead to an unwanted charge injection that perturbs the sensing measurement. Use of the variable amplitude and a fixed duty cycle for the self-test signals can solve the problem of unwanted charge injection.

Self-test operation of the sensor using the variable amplitude, fixed duty cycle technique (that does not belong to the invention) will now be described (see, also, Figure 5B).

Let's assume that a test of the x-axis MEMS sensor 12x is being performed corresponding to an x-axis self-test period $T_{stX}$. There are two drive periods $T_D$ of the drive signal Rd within the x-axis self-test period $T_{stX}$, these two drive periods corresponding to when sensing is performed for the y-axis MEMS sensor 12y and z-axis MEMS second 12z. Coincident with an end of the drive period $T_D$ immediately preceding the x-axis self-test period $T_{stX}$ (i.e., the drive period where sensing of the sensor 12x is being performed), this end corresponding to a trailing edge of the rotor drive signal Rd, and corresponding to a first drive period of the two drive periods within the x-axis self-test period $T_{stX}$, the control circuit of the ASIC generates the selection signal Sel to deactuate (i.e., open) switches S5 and S6 and disconnect the x-axis MEMS sensor 12x from the C2V converter of the ASIC, and actuate (i.e., close) switches S1 and S4 to apply the first self-test voltage $V_{STX}$ through signal line 102 to the stator node 22x and apply the common mode voltage $V_{CM}$ through signal line 104 to the stator node 24x of the x-axis MEMS sensor 12x.

Note here that switches S2 and S3 remain open from the immediately preceding drive period where sensing of the sensor 12x is being performed. Note also, as an alternative, the switches S2 and S3 are closed and the switches S1 and S4 remain open, to oppositely apply the first self-test voltage $V_{STX}$ through signal line 104 to the stator node 24x and apply the common mode voltage $V_{CM}$ through signal line 102 to the stator node 22x of the x-axis MEMS sensor 12x. The leading edge transition from the common mode voltage $V_{CM}$ to the first self-test voltage $V_{STX}$ for the x-axis MEMS sensor 12x self-test occurs during the reset phase. The duration of time this voltage is applied to the stator node is fixed, but the voltage level of the first self-test voltage $V_{STX}$ applied to the stator node is variably controlled by the control circuit of the ASIC through the selection signal Sel in order to set the amount of self-test force $F_{ST}$ that is being applied to displace the mobile (proof) mass of the x-axis MEMS sensor 12x. In a second drive period of the two drive periods within the x-axis self-test period $T_{stX}$, the deactuation of switches S2, S3, S5 and S6 continues. Coincident with an end of the second drive period of the two drive periods the x-axis self-test period $T_{stX}$, and in accordance with the fixed duty cycle for the self-test signal, the control circuit of the ASIC generates the selection signal Sel to deactuate (i.e., open) switch S1 and actuate (i.e., close) switch S2 to terminate application of the first self-test voltage $V_{STX}$ and apply the common mode voltage $V_{CM}$ through line 102 to the stator node 22x. Note: alternatively, instead open switch S3 and close switch S4 in connection with the opposite application. The trailing edge transition from the first self-test voltage $V_{STX}$ to the common mode voltage $V_{CM}$ for the x-axis MEMS sensor 12x self-test occurs during the subsequent reset phase, and thus the fixed duty cycle is specifically equal to two drive periods. After the end of the x-axis self-test period $T_{stX}$, the control circuit of the ASIC 14 generates the selection signal Sel to close switches S5, S6 for the drive period where sensing of the sensor 12x is being performed. In this phase, the stator voltages at nodes 22x and 24x are biased to the common mode voltage $V_{CM}$ level by the C2V converter 32. A sensing of the displaced mobile (proof) mass of the x-axis MEMS sensor 12x, due to the previously applied self-test force $F_{ST}$, can then be made by sensing the capacitance of the capacitors Cs1x and Cs2x. A magnitude of the sensed displacement is compared to an expected displacement in view of the applied self-test force $F_{ST}$ in order to confirm proper operation of the x-axis MEMS sensor 12x. The actuation of the switches as described above causes the stator voltages VSc1x and VSc2x to assume the time behavior depicted in Figure 5B.

It will be noted, due to the interleaved sensing operation of the system, that during the first drive period of the two drive periods for the x-axis self-test period $T_{stX}$, the control circuit of the ASIC generates the selection signal Sel to actuate (i.e., close) switches S11 and S12 to connect the stator nodes 22y, 24y for the y-axis MEMS sensor 12y to the C2V converter of the ASIC for capacitance Cs1y, Cs2y sensing. Furthermore, during the second drive period of the two drive periods for the x-axis self-test period $T_{stX}$, the control circuit of the ASIC generates the selection signal Sel to actuate (i.e., close) switches S17 and S18 to connect the stator nodes 22z, 24z for the z-axis MEMS sensor 12z to the C2V converter of the ASIC for capacitance Cs1z, Cs2z sensing. The application of the first self-test voltage $V_{STX}$ to one of the stator nodes 22 (VSc1x), 24 (VSc2x) of the x-axis MEMS sensor 12x is accordingly being made concurrently with sensing operations being performed on other sensing axes.

A similar operation is performed with respect to testing of the y-axis MEMS sensor 12y (through stator nodes 22y, 24y) and the z-axis MEMS sensor 12z (through stator nodes 22z, 24z). The corresponding self-test periods $T_{stY}$ and $T_{stZ}$ are simply shifted (offset and partially overlapping) in time. Specifically, application of the second self-test voltage $V_{STY}$ for a variable amplitude, fixed duty cycle self-test causing displacement of the sensing (proof mass) of the y-axis MEMS sensor 12y occurs during the drive periods $T_D$ associated with z-axis sensing and x-axis sensing. Similarly, application of the third self-test voltage $V_{STZ}$ for a variable amplitude, fixed duty cycle self-test causing displacement of the sensing (proof mass) of the z-axis MEMS sensor 12z occurs during the drive periods $T_D$ associated with x-axis sensing and y-axis sensing.

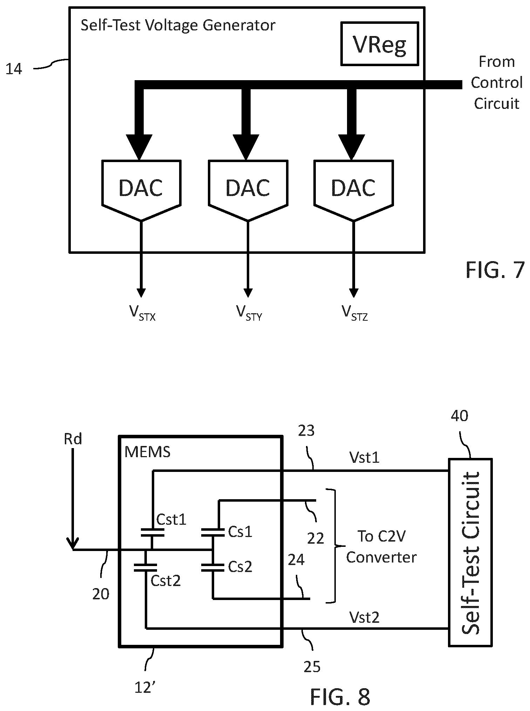

Reference is now made to Figure 7 which shows details of the self-test voltage generator circuit for use in connection with the generation of variable amplitude, fixed duty cycle self-test signals (not belonging to the invention). A digital-to-analog converter (DAC) circuit is provided for the generation of each of the self-test voltages $V_{STX}$, $V_{STY}$, $V_{STZ}$. Each DAC circuit receives a digital control signal from the control circuit of the ASIC 14, with the bits of the digital control signal specifying a certain voltage level to be generated by the DAC circuit for setting the level of the variable amplitude self-test voltages $V_{STX}$, $V_{STY}$, $V_{STZ}$. A supply voltage for the DAC circuits may be provided, for example, by a charge pump (CP) circuit (it being noted that use of a CP circuit is not at all mandatory and that other options for generating the voltages exist and are well known to those skilled in the art). In a preferred implementation, a voltage regulator (Vreg) may be used.

Figure 8 illustrates an alternative embodiment for the MEMS accelerometer sensor 12'. The sensor 12' differs from the sensor 12 in that the sensing capacitances Cs1 and Cs2 are not used for applying a displacement force to the mobile (proof) mass. Instead, the sensor 12' includes two additional self-test capacitances Cst1 and Cst2 for use during self-test operations. The capacitors Cs1, Cs2, Cst1, Cst2 have a common electrical terminal coupled to the rotor node 20 and separate electrical terminals coupled, respectively, to the two sensing stator nodes 22 and 24 and two self-test stator nodes 23 and 25. The sensing stator nodes 22 and 24 are coupled to the ASIC 14 through the MUX circuit 13 (Figure 2). The self-test stator nodes 23 and 25 are coupled to receive the self-test signals Vst1, Vst2 from a self-test circuit 40. The self-test signals Vst1, Vst2 may, as described herein, comprise either fixed amplitude, variable duty cycle self-test signals or variable amplitude, fixed duty cycle self-test signals.

Finally, it is clear that numerous variations and modifications may be made to method described and illustrated herein, all falling within the scope of the invention as defined in the attached claims.

**Claims**

1. A method for self-testing an accelerometer system (10') comprising a plurality of microelectromechanical system -MEMS- accelerometer sensors (12x, 12y, 12z), a charge sensing circuit (32-36) and a multiplexer (13) configured to selectively couple sensing outputs of the MEMS accelerometer sensors to the charge sensing circuit in a cyclically repeating sensing period, wherein each sensing period includes a reset phase and a read phase, the method comprising:

   coupling the sensing outputs of a first MEMS accelerometer sensor of said plurality of MEMS accelerometer sensors (12x, 12y, 12z) through the multiplexer to the charge sensing circuit during a first sensing period;
   applying a self-test voltage to a second MEMS accelerometer sensor of said plurality of MEMS accelerometer sensors during said first sensing period, said self-test voltage having a leading edge coinciding with the reset phase of said first sensing period, and wherein said self-test voltage has a variably controlled excitation voltage;
   coupling the sensing outputs of the second MEMS accelerometer sensor through the multiplexer to the charge sensing circuit during a second sensing period that occurs subsequent to the first sensing period;
   setting a value of the variably controlled excitation voltage to achieve a desired displacement of a sensing mass of the second MEMS accelerometer sensor;
   sensing, by the charge sensing circuit, an actual displacement of the sensing mass of the second MEMS accelerometer sensor during the second sensing period; and
   comparing the actual displacement to the desired displacement,
   wherein setting a value comprises using a variable duty cycle self-test signal.

2. The method of claim 1, wherein applying the self-test voltage to the second MEMS accelerometer sensor comprises applying the self-test voltage to the sensing outputs (22, 24) of the second MEMS accelerometer sensor.

3. The method of claim 1, wherein applying the self-test voltage to the second MEMS accelerometer sensor comprises applying the self-test voltage to self-test inputs (23, 25) of the second MEMS accelerometer sensor.

4. The method of any of the preceding claims, further comprising sensing, by the charge sensing circuit, a displacement of the sensing mass of the first MEMS accelerometer sensor during the first sensing period.

5. The method of any of the preceding claims, further comprising applying a force signal to a rotor of each MEMS accelerometer sensor of said plurality of MEMS accelerometer sensors, wherein said force signal is a square wave signal having a drive period equal to said sensing period, and wherein an edge of said force signal coincides with the reset phase.

6. The method of the preceding claim, wherein the edge of said force signal is a trailing edge.

7. The method of claim 1, wherein applying the self-test voltage comprises applying the self-test voltage to a first sensing output of the MEMS accelerometer sensor and applying a common mode voltage of the charge sensing circuit to a second sensing output of the MEMS accelerometer sensor.

8. The method of any of the preceding claims, wherein the duration of time of the variably controlled excitation voltage is variable controlled by a control circuit of an ASIC (14) to set the amount of self-test force FST that is being applied to the sensing mass of the second MEMS accelerometer sensor.

9. A method for self-testing an accelerometer system (10') comprising first, second and third microelectromechanical system -MEMS- accelerometer sensor (12x, 12y, 12z), a charge sensing circuit (32-36) and a multiplexer (13) configured to selectively couple sensing outputs of the first, second and third MEMS accelerometer sensors to the charge sensing circuit in a cyclically repeating sensing period, wherein each sensing period includes a reset phase and a read phase, the method comprising:

coupling the sensing outputs of the first MEMS accelerometer sensor through the multiplexer to the charge sensing circuit during a first sensing period;

coupling the sensing outputs of the second MEMS accelerometer sensor through the multiplexer to the charge sensing circuit during a second sensing period;

coupling the sensing outputs of the third MEMS accelerometer sensor through the multiplexer to the charge sensing circuit during a third sensing period;

applying a first self-test voltage to the first MEMS accelerometer sensor during said second and third sensing periods, wherein said first self-test voltage has a first variably controlled excitation voltage with a leading edge coinciding with the reset phase of said second sensing period;

applying a second self-test voltage to the second MEMS accelerometer sensor during said third and first sensing periods, wherein said second self-test voltage has a second variably controlled excitation voltage with a leading edge coinciding with the reset phase of said third sensing period;

applying a third self-test voltage to the third MEMS accelerometer sensor during said first and second sensing periods, wherein said third self-test voltage has a third variably controlled excitation voltage with a leading edge coinciding with the reset phase of said second sensing period;

setting a value of the second variably controlled excitation voltage during the third and first sensing periods to achieve a desired displacement of a sensing mass of the second MEMS accelerometer sensor;

sensing, by the charge sensing circuit, an actual displacement of the sensing mass of the second MEMS accelerometer sensor during the second sensing period; and

comparing the actual displacement to the desired displacement,

wherein setting a value of the second variably controlled excitation voltage comprises using a variable duty cycle self-test signal.

10. The method of the preceding claim, wherein applying the self-test voltage comprises applying the self-test voltage to the sensing outputs of the MEMS accelerometer sensor.

11. The method of the preceding claim, wherein applying the self-test voltage comprises applying the self-test voltage to self-test inputs of the MEMS accelerometer sensor.

12. The method of any of claims 9-11, further comprising:

setting a value of the third variably controlled excitation voltage during the first and second sensing periods to achieve a desired displacement of a sensing mass of the third MEMS accelerometer sensor;

sensing by the charge sensing circuit of an actual displacement of the sensing mass of the third MEMS accelerometer sensor during the third sensing period; and

comparing the actual displacement to the desired displacement,

wherein setting a value of the third variably controlled excitation voltage comprises using a variable duty cycle self-test signal.

13. The method of claim 9, further comprising applying a force signal to a rotor of each of the first, second and third MEMS accelerometer sensors, wherein said force signal is a square wave signal having a drive period equal to said sensing period, and wherein an edge of said force signal coincides with the reset phase , wherein the edge of said force signal is preferably a trailing edge.

14. The method of any of claims 9-13, further comprising:

setting a value of the first variably controlled excitation voltage during the second and third sensing periods to achieve a desired displacement of a sensing mass of the first MEMS accelerometer sensor;

sensing by the charge sensing circuit of an actual displacement of the sensing mass of the first MEMS accelerometer sensor during the first sensing period; and

comparing the actual displacement to the desired displacement.

15. The method of any of claims 9-13, wherein applying the self-test voltage comprises applying the self-test voltage to a first sensing output of the MEMS accelerometer sensor and applying a common mode voltage of the charge sensing circuit to a second sensing output of the MEMS accelerometer sensor.

FIG. 1

FIG. 2

FIG. 3A

FIG. 3B

FIG. 4A

FIG. 4B

FIG. 5A

FIG. 5B

FIG. 6

Self-Test Voltage Generator

VReg

14

From
Control
Circuit

DAC    DAC    DAC

FIG. 7

$V_{STX}$    $V_{STY}$    $V_{STZ}$

Rd

40

23

MEMS    Vst1

Cst1    Cs1

22    To C2V
Converter

24

Cst2    Cs2

20

Self-Test Circuit

Vst2

25

12'

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016202286 A1